# EUROPEAN PATENT SPECIFICATION

(11) **EP 3 703 959 B1**
(45) Date of publication and mention of the grant of the patent: **19.07.2023**
(21) Application number: 17808639.3
(22) Date of filing: 30.10.2017
(51) Int. Cl.: B60C 11/04, B60C 11/12

(54) **HEAVY TRUCK TIRE TREAD AND HEAVY TRUCK TIRE**
LASTWAGENREIFENLAUFFLÄCHE UND LASTWAGENREIFEN
BANDE DE ROULEMENT DE PNEU DE POIDS LOURD ET PNEU DE POIDS LOURD

(43) Date of publication of application: 09.09.2020
(73) Proprietor: Compagnie Générale des Etablissements Michelin, 63000 Clermont-Ferrand (FR)
(72) Inventor: ABAROTIN, Victor, Greenville SC 29605 (US)
(74) Representative: Casalonga
(86) International application number: PCT/US2017/058984
(87) International publication number: WO 2019/088967

(56) References cited:
- WO-A1-2016/177977
- CA-A1- 2 000 945
- JP-A- H11 105 513
- JP-A- 2002 362 115
- JP-A- 2012 153 156
- JP-A- 2017 074 845
- KR-A- 20070 097 828

## Description

### FIELD OF THE INVENTION

This invention relates generally to tire treads and tires. More specifically, this invention relates to tire treads and tires best suitable for the drive axle(s) of heavy trucks such as the drive axle(s) of tractors used in tractor-semi-trailer combinations or of single unit straight trucks.

### BACKGROUND OF THE INVENTION

JPH11105513A relates to a pneumatic tire with a center rib and a second rib having a sipe that attains to the full width of these ribs, and a shoulder ribe having a sipe openedonly to the groove wall side of the center rib. CA2000945A1 relates to a pneumatic tire treaddivided into plural ribs by circumferential main grooves, wherein plural sipes are formed in atleast the shoulder ribs. US2018/0134089A1 relates to a tread for a motor vehicle tire with means for substantially reducing running noise.

Tire treads generally extend about the outer circumference of a tire to operate as the intermediary between the tire and a surface upon which it travels (the operating surface). Contact between the tire tread and the operating surface occurs along a footprint of the tire. Tire treads provide grip to resist tire slip that may result during tire acceleration, braking, and/or cornering. Tire treads may also include tread elements, such as ribs or lugs, and tread features, such as grooves and sipes, each of which may assist in providing target tire performance when a tire is operating under particular conditions.

One problem with treads for drive tires is the compromise between traction, rolling resistance and wear / abnormal wear.

It is known that adding sipes in a tire rib can improve wear rate and traction. But it has never been used successfully in the shoulder ribs of drive tires for the long-haul trucking application because it often triggers abnormal wear. The shoulders of long-haul drive tires are therefore typically designed with solid ribs, with no full-width transverse sipes or full-depth transverse grooves. As a result, the design of long-haul drive tire treads is sacrificing shoulder rib wear rate and traction in order to avoid abnormal wear.

### SUMMARY OF THE INVENTION

The invention provides for a heavy truck tire tread having a longitudinal direction, a lateral direction and a thickness direction, said tread comprising :
- longitudinal grooves separating longitudinal ribs;
- a pair of opposing tread edges spaced apart along the lateral direction;
- a pair of shoulder ribs, each shoulder rib being adjacent to a respective tread edge of said pair of tread edges;

wherein the shoulder ribs are solid ribs comprising lateral full depth sipes running at a sipe angle relative to the lateral direction and;
wherein an average sipe angle over a center portion of said shoulder ribs is greater than 30° in absolute value.

In another embodiment, the average sipe angle over the center portion of said shoulder ribs is less than 70° in absolute value.

In another embodiment, the average sipe angle over the center portion of said shoulder ribs is greater than 35° and less than 55° in absolute value.

In another embodiment, said sipe angle is less than 30° in absolute value at a point where the sipe exits the shoulder rib towards the tread edge.

In another embodiment, a ratio of the average sipe depth with the average distance between consecutive sipes is at least 0.3.

In another embodiment, the ratio of the average sipe depth with the average distance between consecutive sipes is between 0.5 and 1.5.

In another embodiment, said sipe exits into a shoulder notch of the shoulder rib towards the tread edge.

In another embodiment, the sipes are oriented relative to the rolling direction (RD) such that the interior end of the sipe at the shoulder groove makes contact with the ground before the exterior end of the sipe at the tread edge.

The invention also provides for a heavy truck tire comprising such a tread.

The foregoing and other objects, features and advantages of the invention will be apparent from the following more detailed descriptions of a particular embodiment of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. **1** is a perspective view of a heavy truck tire comprising an embodiment of the disclosed tire tread.
FIG. **2** is a front view of part of the tread of FIG. **1** showing details of its design at a much bigger scale.
FIGS **3** to **6** are front views similar to that of FIG. **2** showing other embodiments of the tread.

The use of the same or similar reference numerals in the figures denotes the same or similar features.

### DETAILED DESCRIPTION OF PARTICULAR EMBODIMENTS

Reference will now be made in detail to embodiments of the invention, examples of which are illustrated in the drawings. These examples are provided by way of explanation of the invention.

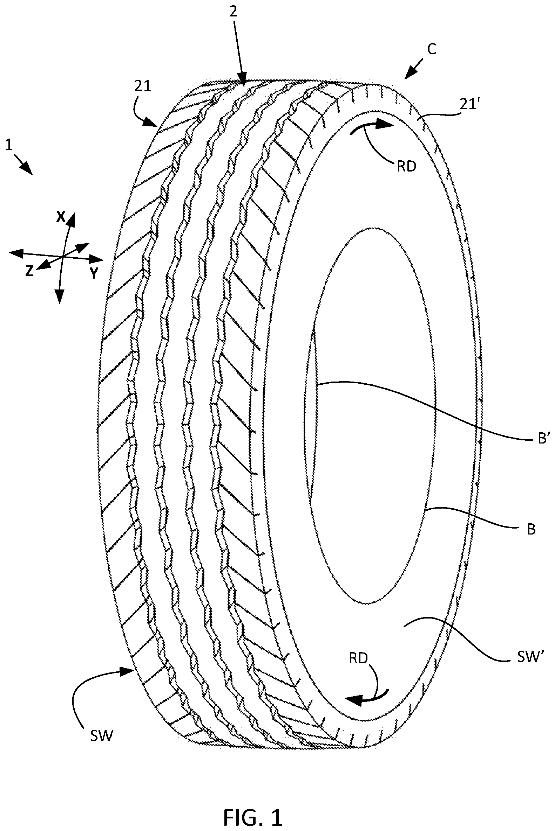

As shown in FIG. **1****,** a heavy truck tire **1** generally comprises a crown portion **C** connected by respective sidewalls **SW, SW'** to beads portions **B, B'.** The crown portion comprises a tread **2** according to an embodiment of the invention. The design of the tread is substantially symmetric, that is to say that the tread features are arranged substantially symmetrically about the center plane of the tread. This tread is said to be of a directional design because it has a different appearance according to which side it is oriented. A directional tire or tread does not only look differently but it also performs differently if used in one rolling direction or the other. This is why directional treads or tires conventionally bear markings that indicate the designed rolling direction. Such markings may take the form of arrows **RD** pointing in the designed rolling direction. Using the tire for rolling in the opposite direction would be detrimental to its best performance.

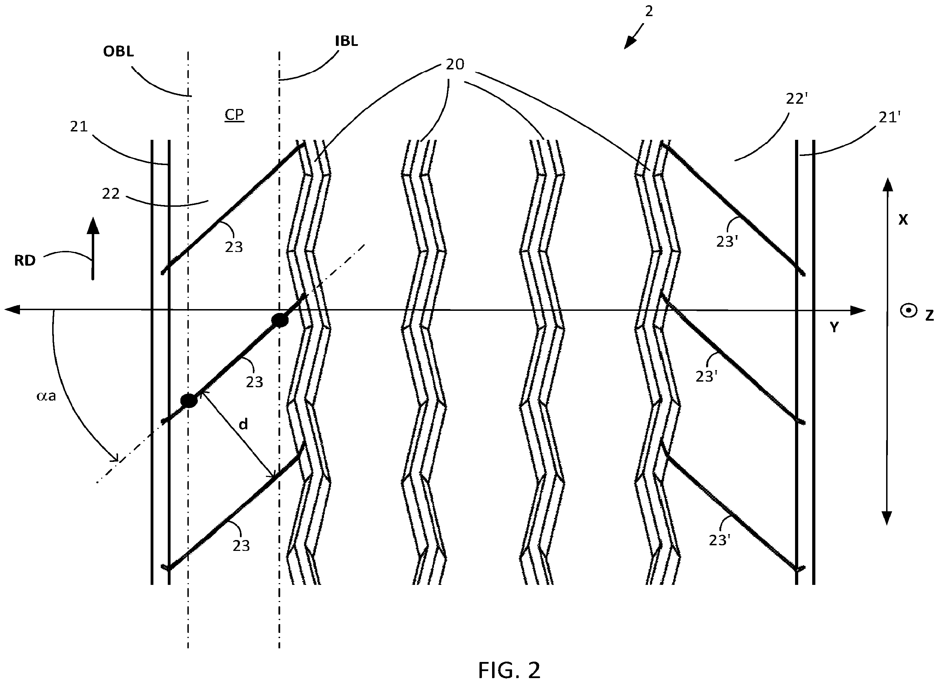

FIG **2** is a magnified and flattened projection view of a portion of the tread **2** of FIG **1****.** As shown in FIG. **2****,** the tread has a longitudinal direction **X** (also referred to as the circumferential direction of the tire), a lateral direction **Y** (also referred to as the axial or transverse direction) and a thickness direction **Z** (also referred to as the tread depth direction).

The tread depth is generally defined as the distance between the tread contact surface and a translation of this contact surface to be tangent to the deepest features in the tread.

The tread has respective tread edges **21, 21'** on each side and longitudinal ribs defined by longitudinal grooves **20** separating the ribs. Longitudinal grooves may be straight or undulate along their main direction as represented in the FIGS. The ribs defined between the respective shoulder grooves and tread edges are referred to as shoulder ribs **22, 22'.** Shoulder ribs are solid ribs comprising lateral sipes **23** running across them and connecting the shoulder grooves to the tread edges. A sipe is the narrow space formed in a tread between walls of material over a depth at most equal to the tread depth, said walls being able, at least in part, to come into contact with one another in the usual running conditions of the tire. Sipes are generally made as thin as manufacturing would reasonably allow, most of the time under 1 mm and preferably at around 0.5 mm. Sipes **23** are full depth sipes. Sipes are said to be full depth sipes when their average depth is at least 50% of the tread depth.

As shown on the left side of FIG. **2****,** a center portion **CP** of the shoulder rib is defined between an outer boundary line **OBL** and an inner boundary line **IBL.** The outer boundary line **OBL** is a longitudinal straight line running at an average distance of 8 mm from the tread edge **21.** The inner boundary line **IBL** is a longitudinal straight line running at an average distance of 5 mm from the interior edge of the shoulder rib, adjacent to the shoulder groove **20.**

The orientation of a lateral sipe **23** is defined by its angle **α** relative to the lateral direction **Y.** A certain angle **α** can be measured in any location along the sipe. This local angle **α** can be a constant value in the case of a straight sipe but **α** can also vary significantly along the length of the sipe. To characterize the main orientation of the sipe, an average sipe angle **αa** is defined in the center portion **CP** of the rib. The average sipe angle αa is defined as the angle relative to the lateral direction **Y** of a straight line connecting the points where the sipe intersects the inner and outer boundary lines **IBL, OBL.** According to the invention, this average angle is greater than 30° and preferably less than 70° in absolute value. Using absolute value to characterize an angle is a way to focus on its magnitude and ignore its direction.

A distance **d** can be measured between consecutive sipes. A sipe density **SD** can be established as the ratio of the average sipe depth **ASD** with the average distance **d (SD=ASD/d).**

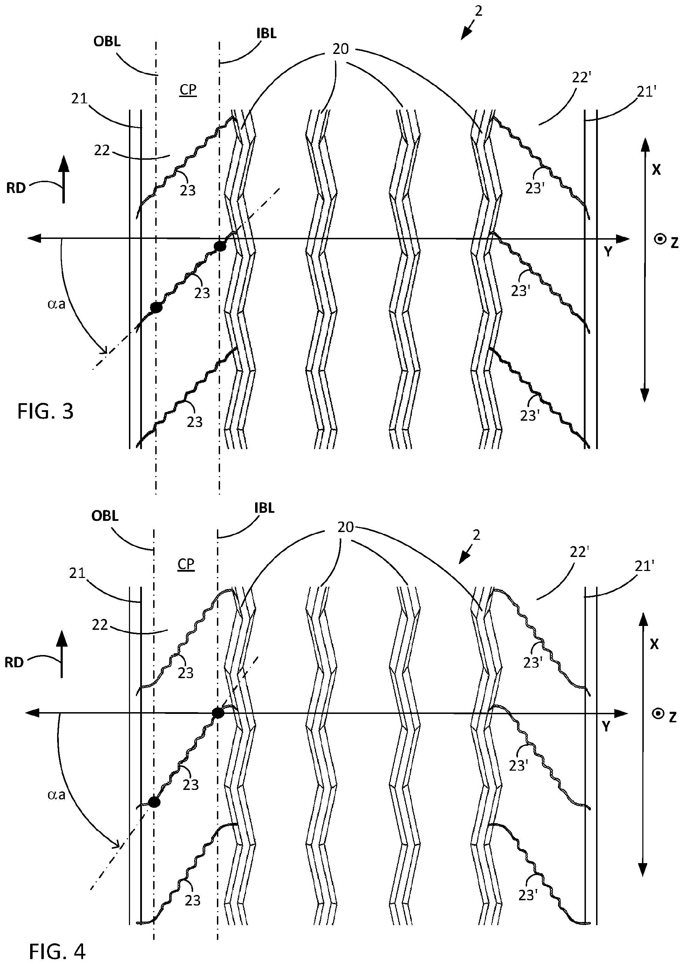

FIG **3** shows another embodiment where the sipes are undulating (zigzagging) along their main direction. Undulated sipes promote tread stiffness due to the sipe walls interlocking when loaded on the ground. Undulations may have many different shapes and can typically be one-directional (so called zigzag sipes) or bi-directional (so called egg-crate sipes). This FIG also illustrates the fact that the local sipe angle **α** may vary to a large extent while the average sipe angle **αa** is maintained between 30° and 70°.

FIG **4** shows yet another embodiment where the sipes exit to the sides of the shoulder rib at a lower angle, typically less than 30°.

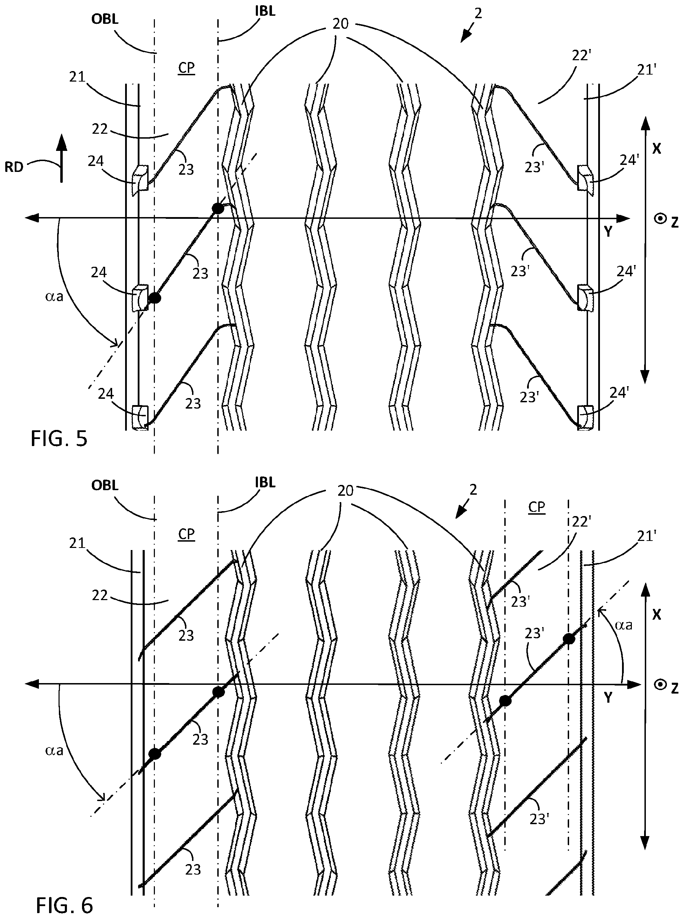

FIG **5** shows yet another embodiment where the sipes exit to the outside of the shoulder rib into notches **24** that are recessed from the tread edges. Tread edge notches do not affect the definition of the location of the outer boundary line **OBL.**

In FIGS. **1** to **5****,** each side of the tread is represented as being symmetric to the other side of the tread relative to a center (or equatorial) plane of the tread. But a tread according to an illustrative example not falling under the scope of the claims may also comprise tread halves that are notably different as long as each tread half remains within the scope of the invention as limited by the claims.

FIG **6** shows a tread as an illustrative example not falling under the scope of the claims similar to that of FIG **2** except for the fact that its pattern is made non-directional by having the sipe angles on one side of the tread reversed. This illustrates the fact that the tread may be directional as shown in FIGS. **1** to **5** as well as non-directional.

In the drawings, the grooves are shown in the generic and conventional shape of fully open grooves but they could be of many other forms. They may for instance be partially hidden grooves, that is to say, grooves that may not be always fully open to the tread surface. Such grooves may for example undulate along their length between a lower position where they are only connected to the surface by a sipe and a higher position where they are fully open at the surface. Partially hidden grooves may also consist in an under-surface duct connected to the surface by a series of radially extending passages.

The tread may also have shallow depressions, markings or engravings in otherwise solid shoulder ribs. Such shallow features and are intended to wear out during the early wear life of the tread and do not affect the stiffness of the ribs.

It will be apparent to those skilled in the art that various modifications and variations can be made in the present invention without departing from the scope of the invention. For instance, features illustrated or described as part of one embodiment, can be used with another embodiment to yield a still further embodiment. As already discussed above, a tread or tire according to the invention may also comprise tread halves that are notably different from one another as long as each tread half remains within the scope of the invention as limited by the claims. Thus, it is intended that the present invention covers such modifications and variations as they fall within the scope of the appended claims.

## Claims

1. A heavy truck tire tread (2) having a longitudinal direction (X), a lateral direction (Y) and a thickness direction (Z), said tread comprising:
- longitudinal grooves (20) separating longitudinal ribs, wherein two of the longitudinal grooves (20) are shoulder grooves (20);
- a pair of opposing tread edges (21, 21') spaced apart along the lateral direction (Y);
- a pair of shoulder ribs (22, 22'), each shoulder rib (22, 22') being adjacent to a respective tread edge (21, 21') of said pair of tread edges (21, 21');
wherein the shoulder ribs (22, 22') are solid ribs comprising lateral full depth sipes (23, 23') running at a sipe angle (a) relative to the lateral direction (Y), wherein the full depth sipes (23, 23') extend completely across the shoulder ribs (22, 22') from the shoulder grooves (20) to the tread edges (21, 21') and;
wherein an average sipe angle (aA) over a center portion (CP) of said shoulder ribs (22, 22') is greater than 30° in absolute value,
**characterized in that** each side of the heavy truck tire tread (2) is symmetric to the other side of the heavy truck tire tread (2) relative to a center plane of the heavy truck tire tread (2).

2. A heavy truck tire tread according to Claim 1, wherein the average sipe angle (aA) over the center portion of said shoulder ribs is less than 70° in absolute value.

3. A heavy truck tire tread according to Claims 1 and 2, wherein the average sipe angle (aA) over the center portion (CP) of said shoulder ribs (22, 22') is greater than 35° and less than 55° in absolute value.

4. A heavy truck tire tread according to any of the preceding Claims, wherein said sipe angle (a) is less than 30° in absolute value at a point where the sipe (23, 23') exits the shoulder rib (22, 22') towards the tread edge (21, 21').

5. A heavy truck tire tread according to any of the preceding Claims, wherein a ratio **(SD)** of the average sipe depth **(ASD)** with the average distance between consecutive sipes **(d)** is at least 0.3.

6. A heavy truck tire tread according to Claim 5, wherein the ratio **(SD)** of the average sipe depth **(ASD)** with the average distance between consecutive sipes **(d)** is between 0.5 and 1.5.

7. A heavy truck tire tread according to any of the preceding Claims, wherein said sipe exits into a shoulder notch **(24)** of the shoulder rib towards the tread edge **(21).**

8. A heavy truck tire tread according to any of the preceding Claims, wherein the sipes are oriented relative to the rolling direction **(RD)** such that the interior end of the sipe at the shoulder groove makes contact with the ground before the exterior end of the sipe at the tread edge.

9. Heavy truck tire **(1)** comprising a tread **(2)** according to any of the preceding Claims.

## Patentansprüche

1. Laufflächenstruktur (2) für einen schweren Lkw-Reifen mit einer Längsrichtung (X), einer Querrichtung (Y) und einer Dickenrichtung (Z), wobei die Laufflächenstruktur umfasst:
- Längsrillen (20), die Längsrippen trennen, wobei zwei der Längsrillen (20) Schulterrillen (20) sind;
- ein Paar gegenüberliegender Laufflächenstrukturkanten (21, 21'), die entlang der Querrichtung (Y) beabstandet sind;
- ein Paar von Schulterrippen (22, 22'), wobei jede Schulterrippe (22, 22') an eine entsprechende Laufflächenstrukturkante (21, 21') des Paars von Laufflächenstrukturkanten (21, 21') angrenzt;
wobei die Schulterrippen (22, 22') massive Rippen sind, die seitliche Einschnitte (23, 23') voller Tiefe aufweisen, die unter einem Einschnittwinkel (a) relativ zur Querrichtung (Y) verlaufen, wobei sich die Einschnitte (23, 23') voller Tiefe vollständig über die Schulterrippen (22, 22') von den Schulterrillen (20) zu den Laufflächenstrukturkanten (21, 21') erstrecken und;
wobei ein durchschnittlicher Einschnittswinkel (aA) über einen Mittelabschnitt (CP) der Schulterrippen (22, 22') im Absolutwert größer als 30° ist,
**dadurch gekennzeichnet, dass** jede Seite der Schwerlastreifen-Laufflächenstruktur (2) symmetrisch zu der anderen Seite der Schwerlastreifen-Laufflächenstruktur (2) relativ zu einer Mittelebene der Schwerlastreifen-Laufflächenstruktur (2) ist.

2. Lkw-Reifen-Laufflächenstruktur nach Anspruch 1, wobei der durchschnittliche Einschnittswinkel (aA) über dem Mittelabschnitt der Schulterrippen einen Absolutwert von weniger als 70° hat.

3. Lkw-Reifen-Laufflächenstruktur nach den Ansprüchen 1 und 2, wobei der durchschnittliche Einschnittwinkel (aA) über dem Mittelteil (CP) der Schulterrippen (22, 22') im absoluten Wert größer als 35° und kleiner als 55° ist.

4. Lkw-Reifen-Laufflächenstruktur nach einem der vorhergehenden Ansprüche, wobei der Einschnittwinkel (a) an einem Punkt, an dem die Einschnitt (23, 23') aus der Schulterrippe (22, 22') in Richtung der Laufflächenstrukturkante (21, 21') austritt, einen Absolutwert von weniger als 30° hat.

5. Lkw-Reifen-Laufflächenstruktur nach einem der vorhergehenden Ansprüche, wobei das Verhältnis (SD) der durchschnittlichen Einschnitttiefe (ASD) zum durchschnittlichen Abstand zwischen aufeinanderfolgenden Einschnittn (d) mindestens 0,3 beträgt.

6. Lkw-Reifen-Laufflächenstruktur nach Anspruch 5, wobei das Verhältnis (SD) der durchschnittlichen Einschnitttiefe (ASD) zum durchschnittlichen Abstand zwischen aufeinanderfolgenden Einschnitten (d) zwischen 0,5 und 1,5 liegt.

7. Lkw-Reifen-Laufflächenstruktur nach einem der vorhergehenden Ansprüche, wobei der Einschnitt in eine Schulterkerbe (24) der Schulterrippe in Richtung der Laufflächenstrukturkante (21) austritt,

8. Lkw-Reifen-Laufflächenstruktur nach einem der vorhergehenden Ansprüche, wobei die Einschnitte relativ zur Abrollrichtung (RD) so ausgerichtet sind, daß das innere Ende des Einschnitts an der Schulterrille den Boden vor dem äußeren Ende des Einschnitts an der Laufflächenstrukturkante berührt.

9. Schwerlastreifen (1) mit einer Laufflächenstruktur (2) nach einem der vorangehenden Ansprüche.

## Revendications

1. Bande de roulement de pneu de poids lourd (2) présentant une direction longitudinale (X), une direction latérale (Y) et une direction d'épaisseur (Z), ladite bande de roulement comprenant :
- des rainures longitudinales (20) séparant des nervures longitudinales, dans laquelle deux des rainures longitudinales (20) sont des nervures d'épaulement (20) ;
- une paire de bords de bande de roulement (21, 21') opposés espacés l'un de l'autre le long de la direction latérale (Y) ;
- une paire de nervures d'épaulement (22, 22'), chaque nervure d'épaulement (22, 22') étant adjacente à un bord de bande de roulement (21, 21') respectif de ladite paire de bords de bande de roulement (21, 21') ;
dans laquelle les nervures d'épaulement (22, 22') sont des nervures solides comprenant des lamelles de profondeur totale (23, 23') latérales passant à un angle de lamelle (a) par rapport à la direction latérale (Y), dans laquelle les lamelles de profondeur totale (23, 23') s'étendent complètement sur toute l'étendue des nervures d'épaulement (22, 22') à partir des nervures d'épaulement (20) vers les bords de bande de roulement (21, 21') et ;
dans laquelle un angle de lamelle moyen (aA) sur une partie centrale (CP) desdites nervures d'épaulement (22, 22') est supérieur à 30° en valeur absolue,
**caractérisée en ce que** chaque côté de la bande de roulement de pneu de poids lourd (2) est symétrique par rapport à l'autre côté de la bande de roulement de pneu de poids lourd (2) par rapport à un plan central de la bande de roulement de pneu de poids lourd (2).

2. Bande de roulement de pneu de poids lourd selon la revendication 1, dans laquelle l'angle de lamelle moyen (aA) sur la partie centrale desdites nervures d'épaulement est inférieur à 70° en valeur absolue.

3. Bande de roulement de pneu de poids lourd selon les revendications 1 et 2, dans laquelle l'angle de lamelle moyen (aA) sur la partie centrale (CP) desdites nervures d'épaulement (22, 22') est supérieur à 35° et inférieur à 55° en valeur absolue.

4. Bande de roulement de pneu de poids lourd selon l'une quelconque des revendications précédentes, dans laquelle ledit angle de lamelle (a) est inférieur à 30° en valeur absolue au niveau d'un point où la lamelle (23, 23') sort de la nervure d'épaulement (22, 22') en direction du bord de bande de roulement (21, 21').

5. Bande de roulement de pneu de poids lourd selon l'une quelconque des revendications précédentes, dans laquelle un rapport (SD) de la profondeur de lamelle moyenne (ASD) avec la distance moyenne entre des lamelles (d) consécutives est au moins 0,3.

6. Bande de roulement de pneu de poids lourd selon la revendication 5, dans laquelle le rapport (SD) de la profondeur de lamelle moyenne (ASD) avec la distance moyenne entre des lamelles (d) consécutives est compris entre 0,5 et 1,5.

7. Bande de roulement de pneu de poids lourd selon l'une quelconque des revendications précédentes, dans laquelle ladite lamelle sort à l'intérieur d'une encoche d'épaulement (24) de la nervure d'épaulement en direction du bord de bande de roulement (21).

8. Bande de roulement de pneu de poids lourd selon l'une quelconque des revendications précédentes, dans laquelle les lamelles sont orientées par rapport à la direction de roulement (RD) de telle sorte que l'extrémité intérieure de la lamelle au niveau de la rainure d'épaulement établit un contact avec le sol avant l'extrémité extérieure de la lamelle au niveau du bord de bande de roulement.

9. Pneu de poids lourd (1) comprenant une bande de roulement (2) selon l'une quelconque des revendications précédentes.
